# FASCICULE DE BREVET EUROPEEN

(11) **EP 2 134 067 B1**
(45) Date de publication et mention de la délivrance du brevet: **29.08.2018**
(21) Numéro de dépôt: 09162551.7
(22) Date de dépôt: 12.06.2009
(51) Int. Cl.: H04M 3/42, H04M 1/725

(54) **Procédé et système permettant de répondre à un appel par un message adapté au statut de l'appelé**
Verfahren und System, das auf einen Anruf mit einer Nachricht antwortet, wobei die Nachricht auf den Status des Angerufenen zugeschnitten ist
Method and system allowing for a response to a call with a message according to the status of the callee

(30) Priorité: 12.06.2008 FR 0803288
(43) Date de publication de la demande: 16.12.2009
(73) Titulaire: Alcatel Lucent, 91620 Nozay (FR)
(72) Inventeur: Guevel, Yann, 29228, BREST (FR); Dantec, Fabrice, 29228, BREST (FR)
(74) Mandataire: Berthier, Karine

(56) Documents cités:
- WO-A-97/20423
- US-A1- 2002 147 811
- US-A1- 2004 248 590

## Description

L'invention concerne un procédé de gestion d'appels téléphoniques dans un système de communications unifiées dans lequel un utilisateur possède au moins un terminal, ainsi qu'un tel système de communications unifiées.

Les systèmes de communications unifiées permettent de proposer un ensemble de services destinés aux professionnels en entreprise afin d'intégrer étroitement les moyens de communications interpersonnelles (téléphonie,...), les outils de travail collaboratif (messagerie instantanée, systèmes de conférences par le web,...) et l'environnement informatique (messagerie électronique, agenda,...).

De tels systèmes comportent notamment des applications de gestion des appels téléphoniques. Toutefois, les fonctionnalités de ces applications sont limitées et sont prédéfinies, sans pouvoir être adaptées de façon dynamique à l'activité ou aux besoins de l'utilisateur lorsqu'il reçoit un appel.

### État de la technique antérieure

US 2002/147811 A1 décrit la possibilité de répondre à un appel entrant par un menu contextuel qui prend en compte le statut de l'utilisateur appelé.

WO 97/20423 A décrit un système d'analyse des appels entrants à destination d'un utilisateur et les traite en fonction d'un niveau de priorité affecté à l'appel entrant. Un menu contextuel est proposé à l'utilisateur lors de la réception d'un appel.

### Exposé de l'invention

L'invention a pour but de pallier aux insuffisances de l'art antérieur en proposant notamment un procédé de gestion dynamique d'appels téléphoniques dans un système de communications unifiées et ce en fonction du statut dudit utilisateur dans ledit système.

A cet effet, et selon un premier aspect, l'invention propose un procédé de gestion d'appels téléphoniques selon la revendication 1 dans un système de communications unifiées selon la revendication 10.

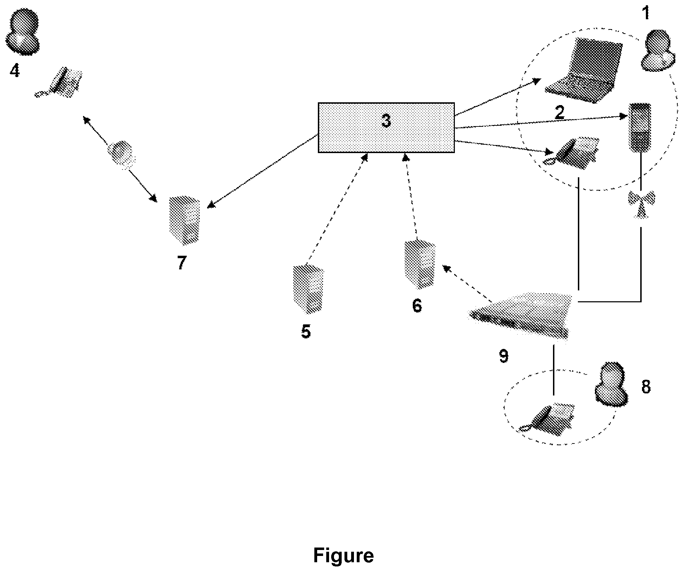

D'autres particularités et avantages de l'invention apparaîtront dans la description, faite en relation avec la figure annexée représentant de façon schématique l'architecture d'un système de communications unifiées selon un mode de réalisation de l'invention.

En relation avec cette figure, le système de communications unifiées comprend une application de gestion d'appels téléphoniques, l'utilisateur 1 possédant au moins un terminal 2 au sein du système (ordinateur, téléphone fixe, téléphone mobile).

En particulier, ce terminal 2 peut comprendre des moyens de téléphonie par Internet et de gestion avancés des appels téléphoniques (par exemple, de type IP-touch de la société Alcatel Lucent).

L'application de gestion d'appels téléphoniques comprend des moyens aptes à élaborer un menu contextuel d'actions 3 en fonction du statut de l'utilisateur 1 dans le système à chaque réception d'un appel sur l'un de ses terminaux 2.

En particulier, le statut de l'utilisateur 1 est relatif à sa présence ou son accessibilité pour les appelants 4, ce statut pouvant être défini en fonction de plusieurs informations accessibles au sein du système de communications unifiées.

Pour ce faire, le système de communications unifiées intègre un agenda de l'utilisateur, de type Outlook. Le statut de l'utilisateur peut alors être défini selon des évènements enregistrés dans cet agenda. Ainsi, lors de la réception d'un appel par un terminal 2 de l'utilisateur 1, l'application est en mesure de savoir si ledit utilisateur 1 est en réunion, par exemple, et à quelle heure cette réunion s'achève.

De plus, le statut de l'utilisateur peut être défini selon son état de connexion à une application de messagerie instantanée du système de communications unifiées. En effet, les applications de messagerie instantanée intègrent des fonctions de sélection du statut d'accessibilité, à savoir les statuts « accessible », « occupé » ou « ne pas déranger ».

Sur la figure, le système de communications unifiées comprend un serveur de collaboration 5 qui comprend les données relatives à l'état de connexion à une application de messagerie instantanée et l'agenda de l'utilisateur afin de permettre l'élaboration du menu contextuel d'actions 3.

Par ailleurs, le statut peut être défini selon des fonctionnalités d'appel du terminal 2 réceptionnant l'appel ou des fonctionnalités d'un autre terminal 2 de l'utilisateur 1. En particulier, lorsque le terminal 2 réceptionnant l'appel comprend une fonctionnalité de double appel, l'utilisateur 1 est considéré par l'application comme accessible. De la même façon, l'utilisateur 1 est accessible lorsque le système de communications unifiées lui connait un terminal 2, tel qu'un téléphone portable, autre que le terminal 2 réceptionnant initialement l'appel.

Enfin, l'utilisateur 1 peut définir son statut lors de la réception de l'appel par son terminal 2. En effet, l'utilisateur 1 peut être accessible au regard de son agenda et de son statut sur la messagerie instantanée mais souhaiter sélectionner des actions sur l'appel au lieu de prendre l'appel. Par conséquent, l'utilisateur pourra adapter son statut en temps réel en mentionnant son inaccessibilité s'il le souhaite.

Le système de communications unifiées comprend un serveur de gestion des statuts d'appels 6 qui comprend les données relatives aux appels reçus et à l'accessibilité de l'utilisateur 1 afin de permettre l'élaboration du menu contextuel d'actions 3.

Un menu contextuel d'actions 3 est élaboré de façon dynamique, en fonction du statut de l'utilisateur 1. Ce menu est toujours présenté à l'utilisateur 1, que celui-ci soit accessible ou non, afin de lui permettre de sélectionner des actions sur l'appel.

En particulier, le menu contextuel d'actions 3 peut être présenté à l'utilisateur 1 en vue de la sélection d'une action par ledit utilisateur.

Cette présentation est réalisée sur l'interface graphique du terminal 2 de l'utilisateur 1 sous forme de liste dont les éléments sont sélectionnables. Les différentes actions permettent de répondre à l'appel en envoyant un message adapté au statut de l'utilisateur 1.

Le menu contextuel d'actions 3 peut également être affiché sur un autre terminal 2 de l'utilisateur 1, tel qu'un ordinateur. Cet autre terminal 2 est apte à être informé des changements de statut de l'utilisateur et de la réception d'un appel. L'utilisateur 1 peut agir à distance sur ce terminal 2, notamment en prenant l'appel depuis ledit terminal 2 ou en renvoyant l'appel vers une messagerie vocale ou un autre terminal 2 depuis ledit terminal.

Selon une réalisation, les actions peuvent être prédéfinies par l'application de gestion d'appels téléphoniques.

Ainsi, l'utilisateur 1 peut sélectionner le transfert de l'appel à une boîte vocale ou à une autre personne. La personne à laquelle sera transféré l'appel peut être prédéfinie par l'application ou choisie par l'utilisateur 1 au sein de la liste des membres du système de communications unifiées.

Selon une autre réalisation, éventuellement cumulative à la réalisation précédente, le menu contextuel 3 comprend des actions correspondant à des messages en réponse à l'appel. En particulier, lorsque l'utilisateur 1 est en réunion et que l'heure de fin de réunion est enregistrée dans son agenda (soit dans 15 minutes), ledit utilisateur 1 peut sélectionner une action correspondant à l'envoi du message « je suis actuellement en réunion, je vous rappelle dans 15 minutes ».

Selon une autre réalisation, éventuellement cumulative aux réalisations précédentes, le menu contextuel 3 comprend une action permettant à l'utilisateur 1 de créer un message en réponse à l'appel.

Ce message créé peut être partiellement prédéfini. En particulier, lorsque l'utilisateur 1 n'est pas en réunion mais n'est pas accessible, il peut sélectionner une action correspondant à l'envoi du message « je suis actuellement indisponible, je vous rappelle dans X minutes ». Dans ce cas, l'échéance de rappel indiquée dans le message est définie par l'utilisateur 1 en temps réel.

Le message peut également être entièrement défini par l'utilisateur 1. A cette fin, l'application comprend en outre des moyens de génération d'un message en réponse pour chaque action dudit menu.

Ces moyens de génération peuvent être ceux d'un système de synthèse vocale, notamment intégré dans un serveur média 7. En effet, à l'aide de tels moyens, l'utilisateur 1 peut sélectionner l'action de création du message de réponse par synthèse vocale dans le menu et/ou saisir un texte par écrit qui sera vocalement transmis à l'appelant.

Selon une autre réalisation, ces moyens de génération peuvent également être ceux inclus dans le système de communications unifiées, tels que la messagerie instantanée et les boites email. A l'aide de ces moyens, l'utilisateur 1 crée intégralement un message en réponse à l'appel qui sera transmis par écrit à l'appelant.

En outre, le procédé prévoit, postérieurement à l'envoi du message en réponse, la possibilité d'envoyer à l'utilisateur 1 une instruction de rappel. Ainsi, par exemple, lorsque l'utilisateur 1 crée un message informant qu'il rappellera l'appelant une heure plus tard, le procédé génère automatiquement une heure plus tard un message d'instruction de rappel pour l'utilisateur 1.

Par ailleurs, le système de communications unifiées peut comprendre une application de transfert d'appel, le menu contextuel d'actions étant alors adapté en fonction d'un éventuel transfert de l'appel reçu. Ainsi, le menu contextuel d'actions est non seulement élaboré en fonction du statut de l'utilisateur 1 réceptionnant l'appel mais également en fonction du statut de l'utilisateur qui est initialement appelé 8, et ce afin d'adapter les actions que l'utilisateur 1, à qui l'appel est transféré, peut sélectionner.

Selon la réalisation représentée, l'appel et les données relatives au statut de l'utilisateur initialement appelé 8 sont transmises au serveur de gestion des statuts d'appels 6 par un serveur d'appels 9 auquel les terminaux des utilisateurs sont connectés.

En particulier, au sein du menu, l'utilisateur 1 à qui l'appel est transféré peut refuser l'appel et sélectionner une action correspondant à l'envoi d'un message rappelant la date de retour de l'utilisateur 8 initialement appelé en se basant notamment sur l'agenda de ce dernier.

## Revendications

1. Procédé de gestion d'appels téléphoniques dans un système de communications unifiées comprenant une application de transfert d'appel, dans lequel un premier utilisateur (1) possède au moins un terminal (2), ledit procédé prévoyant d'élaborer, lors de la réception d'un appel par un terminal (2) dudit premier utilisateur (1), un menu contextuel d'actions (3) en fonction du statut dudit premier utilisateur (1) dans ledit système ainsi qu'en fonction du statut d'un second utilisateur (8) à qui l'appel était initialement destiné lors d'un transfert de l'appel reçu transféré vers le premier utilisateur (1), lesdites actions permettant de répondre à l'appel aux moyens d'un message adapté audit statut du premier utilisateur (1) et du second utilisateur (8).

2. Procédé selon la revendication 1, dans lequel le système de communications unifiées intègre un agenda du premier utilisateur (1), le statut du premier utilisateur (1) étant défini selon des évènements enregistrés dans ledit agenda.

3. Procédé selon l'une des revendications 1 ou 2, dans lequel le statut du second utilisateur est défini selon des données, transmises par un serveur d'appel (9), qui comprennent un agenda du second utilisateur.

4. Procédé selon l'une des revendications 1 à 3, dans lequel le statut du premier utilisateur (1) est défini selon des fonctionnalités d'appel du terminal (2) réceptionnant l'appel ou des fonctionnalités d'un autre terminal (2) du premier utilisateur (1).

5. Procédé selon l'une quelconque des revendications 1 à 4, dans lequel le statut du premier utilisateur (1) est défini selon son état de connexion à une application de messagerie instantanée du système de communications unifiées.

6. Procédé selon l'une quelconque des revendications 1 à 5, dans lequel le premier utilisateur (1) définit son statut lors de la réception de l'appel par son terminal (2).

7. Procédé selon l'une quelconque des revendications 1 à 6, dans lequel le menu contextuel d'actions (3) est présenté au premier utilisateur (1) en vue de la sélection d'une action par ledit premier utilisateur (1).

8. Procédé selon l'une quelconque des revendications 1 à 7, dans lequel le menu contextuel (3) comprend une action permettant au premier 'utilisateur (1) de créer un message en réponse à l'appel.

9. Procédé selon l'une quelconque des revendications 1 à 8, dans lequel, postérieurement à l'envoi du message en réponse, une instruction de rappel est envoyée audit premier utilisateur (1).

10. Système de communications unifiées comprenant une application de transfert d'appel et une application de gestion d'appels téléphoniques qui comprend des moyens aptes, lors de la réception d'un appel par un terminal (2) d'un premier utilisateur (1) dudit système, à élaborer un menu contextuel d'actions (3) en fonction du statut dudit premier utilisateur (1) dans ledit système ainsi qu'en fonction du statut d'un second utilisateur (8) à qui l'appel était initialement destiné lors d'un transfert de l'appel reçu transféré vers le premier utilisateur (1), ladite application comprenant en outre des moyens de génération d'un message en réponse pour chaque action dudit menu.

## Patentansprüche

1. Verfahren zur Verwaltung von Telefonanrufen in einem Unified Communications-System, umfassend eine Rufumleitungsanwendung, wobei ein erster Benutzer (1) mindestens ein Endgerät (2) besitzt, wobei das Verfahren vorsieht, beim Empfang eines Anrufs durch ein Endgerät (2) des ersten Benutzers (1), ein kontextuelles Aktionsmenü (3) in Abhängigkeit vom Status des ersten Benutzers (1) in dem System sowie in Abhängigkeit vom Status eines zweiten Benutzers (8), für den der Anruf ursprünglich bestimmt war, bei einer Umleitung des empfangenen Anrufs, der an den ersten Benutzer (1) umgeleitet wurde, zu entwickeln, wobei die Aktionen erlauben, auf den Anruf mittels einer Nachricht zu antworten, die an den Status des ersten Benutzers (1) und des zweiten Benutzers (8) angepasst ist.

2. Verfahren nach Anspruch 1, wobei das Unified Communications-System einen Organizer des ersten Benutzers (1) integriert, wobei der Status des ersten Benutzers (1) gemäß den in diesem Organizer verzeichneten Ereignissen festgelegt wird.

3. Verfahren nach einem der Ansprüche 1 oder 2, wobei der Status des zweiten Benutzers gemäß den von einem Call-Server (9) übertragenen Daten, die einen Organizer des zweiten Benutzers umfassen, festgelegt wird.

4. Verfahren nach einem der Ansprüche 1 bis 3, wobei der Status des ersten Benutzers (1) gemäß den Anruffunktionen des Endgeräts (2) festgelegt wird, das den Anruf empfängt, oder den Funktionen eines anderen Endgeräts (2) des ersten Benutzers (1).

5. Verfahren nach einem der Ansprüche 1 bis 4, wobei der Status des ersten Benutzers (1) gemäß seinem Verbindungszustand mit einer Instant Messaging-Anwendung des Unified Communications-Systems festgelegt wird.

6. Verfahren nach einem der Ansprüche 1 bis 5, wobei der erste Benutzer (1) seinen Status beim Empfang des Anrufs durch sein Endgerät (2) festlegt.

7. Verfahren nach einem der Ansprüche 1 bis 6, wobei das kontextuelle Aktionsmenü (3) dem ersten Benutzer (1) zwecks Auswahl einer Aktion durch den ersten Benutzer (1) präsentiert wird.

8. Verfahren nach einem der Ansprüche 1 bis 7, wobei das kontextuelle Menü (3) eine Aktion umfasst, die es dem ersten Benutzer (1) erlaubt, eine Nachricht als Antwort auf den Anruf zu generieren.

9. Verfahren nach einem der Ansprüche 1 bis 8, wobei nach dem Versand der Antwortnachricht dem ersten Benutzer (1) eine Rückrufanweisung geschickt wird.

10. Unified Communications-System, umfassend eine Rufumleitungsanwendung und eine Telefonanrufverwaltungsanwendung, die Mittel umfasst, die imstande sind, beim Empfang eines Anrufs durch ein Endgerät (2) eines ersten Benutzers (1) des Systems ein kontextuelles Aktionsmenü (3) in Abhängigkeit vom Status des ersten Benutzers (1) in dem System sowie in Abhängigkeit vom Status eines zweiten Benutzers (8), für den der Anruf ursprünglich bestimmt war, bei einer Umleitung des empfangenen, an den ersten Benutzer (1) umgeleiteten Anrufs zu entwickeln, wobei die Anwendung ferner Mittel zur Erzeugung einer Antwortnachricht für jede Aktion des Menüs umfasst.

## Claims

1. A method for managing telephone calls in a unified communications system comprising a call transfer application, in which a first user (1) has at least one terminal (2), said method providing for the creation, when a call is received by a terminal (2) of said first user (1), of a contextual menu of actions (3) based on the status of said first user (1) within said system and on the status of a second user (8) to whom the call was initially intended when transferring the received call transferred to the first user (1), said actions making it possible to respond to the call by means of a message tailored to the status of the first user (1) and of the second user (8).

2. A method according to claim 1, wherein the unified communications system incorporates a calendar of the first user (1), the status of the first user (1) being defined based on the events recorded in said calendar.

3. A method according to one of the claims 1 or 2, wherein the status of the second user is defined based on data transmitted by a call server (9), that comprises a calendar of the second user.

4. A method according to one of the claims 1 to 3, wherein the status of the first user (1) is defined based on the call features of the terminal (2) receiving the call or the features of another terminal (2) of the first user (1).

5. A method according to any one of the claims 1 to 4, wherein the status of the first user (1) is defined based on his or her connection status to an instant messaging application of the unified communications system.

6. A method according to any one of the claims 1 to 5, wherein the first user (1) defines his or her status when receiving the call at his or her terminal (2).

7. A method according to any one of the claims 1 to 6, wherein the contextual menu of actions (3) is presented to the first user (1) so that said first user (1) can select an action.

8. A method according to any one of the claims 1 to 7, wherein the contextual menu (3) comprises an action that enables the first user (1) to create a message in response to the call.

9. A method according to any one of the claims 1 to 8, wherein, after the response message is sent, a callback instruction is sent to said first user (1).

10. A unified communications system comprising a call transfer application and a phone call management application that comprises means capable, when a call is received by a terminal (2) of a first user (1) of said system, of creating a contextual menu of actions (3) based on the status of said first user (1) within said system and on the status of a second user (8) to whom the call was initially intended when transferring the received call transferred to the first user (1), said application further comprising means of generating a message in response for each action of said menu.
